# FASCICULE DE BREVET EUROPEEN

(11) **EP 3 880 531 B1**
(45) Date de publication et mention de la délivrance du brevet: **30.11.2022**
(21) Numéro de dépôt: 19813098.1
(22) Date de dépôt: 23.10.2019
(51) Int. Cl.: B60W 30/14, B60W 30/18, B60K 31/00, B60W 50/00

(54) **RÉGULATION DE LA VITESSE D'UN VÉHICULE, AVEC PRISE EN COMPTE DE LA VOLONTÉ DU CONDUCTEUR DANS UN VIRAGE**
FAHRZEUGGESCHWINDIGKEITSREGELUNG MIT BERÜCKSICHTIGUNG VON FAHRERWÜNSCHEN IN DER KURVENFAHRT
VEHICLE SPEED REGULATION INCORPORATING DRIVER WISHES UNDER CORNERING

(30) Priorité: 16.11.2018 FR 1871558
(43) Date de publication de la demande: 22.09.2021
(73) Titulaire: PSA Automobiles SA, 78300 Poissy (FR)
(72) Inventeur: BELLE, Claire, 25230 Seloncourt (FR); PERROT, Fabrice, 91430 Igny (FR); FAVREAU, Eric, 68290 Masevaux (FR)
(86) Numéro de dépôt international: PCT/FR2019/052527
(87) Numéro de publication internationale: WO 2020/099748

(56) Documents cités:
- EP-A2- 2 168 806
- US-A1- 2007 208 485
- US-A1- 2012 316 746

## Description

### Domaine technique de l'invention

L'invention concerne les véhicules à conduite au moins partiellement automatisée, et plus précisément la régulation de la vitesse de tels véhicules.

Dans ce qui suit on considère qu'un véhicule est à conduite au moins partiellement automatisée (ou autonome) lorsqu'il peut être conduit de façon automatisée (partielle ou totale (sans intervention de son conducteur)) pendant une phase de conduite automatisée, ou de façon manuelle (et donc avec intervention de son conducteur sur le volant et/ou les pédales) pendant une phase de conduite manuelle.

### Etat de la technique

Certains véhicules à conduite au moins partiellement automatisée comprennent un dispositif de régulation chargé de réguler leur vitesse en fonction d'une consigne de vitesse, éventuellement choisie par leur conducteur.

On connait par le document EP2168806, un dispositif de contrôle de vitesse pour véhicule. On connait par le document US2007/208485, un dispositif et un procédé de commande de déplacement de véhicule.

Dans certains cas, ce dispositif de régulation permet d'adapter la vitesse de son véhicule en fonction du rayon de courbure de la future portion qu'il s'apprête à emprunter sur la voie de circulation sur laquelle il circule. Plus précisément, ce type de dispositif de régulation comprend au moins un calculateur qui, en cas de détection d'un rayon de courbure de la future portion empruntée représentatif d'un virage, contrôle l'imposition à son véhicule d'une phase de décélération jusqu'à une vitesse choisie, puis d'une phase d'accélération jusqu'à obtention d'une vitesse qui est égale à la consigne de vitesse. L'accélération dans la phase d'accélération dépend du rayon de courbure de la portion de route située devant le véhicule. Elle peut donc être limitée ou non. Dans ce dernier cas, c'est le dispositif de régulation de vitesse du véhicule qui assure le contrôle pour rejoindre la vitesse de consigne. En d'autres termes, en cas de détection d'un prochain virage, on réduit temporairement la vitesse du véhicule afin de faciliter son passage dans ce virage et ainsi améliorer le confort des passagers.

Actuellement, lorsque le conducteur du véhicule impose à ce dernier une accélération pendant la phase de décélération, par exemple du fait qu'il est en train de doubler un autre véhicule, le calculateur interrompt temporairement cette phase de décélération, et lorsque le conducteur du véhicule cesse d'imposer une accélération, le calculateur recommence à contrôler l'imposition de la phase de décélération interrompue, laquelle sera ensuite suivie de la phase d'accélération précitée. Un tel mode de fonctionnement ne prend pas en compte la volonté du conducteur, à savoir l'envie de ne pas voir la vitesse de son véhicule baisser jusqu'à la vitesse choisie de fin de phase de décélération, par exemple du fait qu'il veut poursuivre le dépassement en cours dans le virage. En outre, ce mode de fonctionnement peut induire un ralentissement du flux de circulation qui peut paraître incompréhensible à l'un au moins des conducteurs des véhicules qui suivent le véhicule ralenti, voire peut s'avérer dangereux lorsque l'un de ces derniers conducteurs ne s'aperçoit pas du ralentissement, en particulier lorsque le ralentissement est trop faible pour générer son signalement. De plus, si la vitesse du véhicule concerné est très légèrement supérieure à celle des véhicules circulant sur la voie de droite (dans le cas d'une conduite à gauche), le ralentissement du véhicule concerné peut rendre sa vitesse inférieure à celle des véhicules circulant sur la voie de droite.

L'invention a donc notamment pour but d'améliorer la situation.

### Présentation de l'invention

Elle propose notamment à cet effet un procédé, destiné à réguler la vitesse d'un véhicule à conduite au moins partiellement automatisée et connaissant le rayon de courbure d'une future portion qu'il s'apprête à emprunter sur une voie de circulation sur laquelle il circule, et comprenant une étape dans laquelle on régule la vitesse du véhicule en fonction d'une consigne de vitesse, et, en cas de détection d'un rayon de courbure de la future portion qui est représentatif d'un virage, on impose au véhicule une phase de décélération jusqu'à une vitesse choisie puis une phase d'accélération jusqu'à obtention d'une vitesse égale à la consigne de vitesse (éventuellement adaptée en fonction de la vitesse d'un autre véhicule situé devant celui considéré ou s'il n'y a pas de nouveau virage).

Ce procédé se caractérise par le fait que dans son étape, lorsqu'un conducteur du véhicule impose à ce dernier une accélération pendant la phase de décélération, on arrête cette phase de décélération puis on impose au véhicule une autre phase d'accélération jusqu'à obtention d'une vitesse qui est égale à la consigne de vitesse (éventuellement adaptée en fonction de la vitesse d'un autre véhicule situé devant celui considéré ou s'il n'y a pas de nouveau virage).

Grâce à l'invention, la volonté du conducteur, à savoir l'envie de ne pas voir dans un virage la vitesse de son véhicule baisser jusqu'à la vitesse choisie de fin de phase de décélération, est désormais prise en compte.

Le procédé selon l'invention peut comporter d'autres caractéristiques qui peuvent être prises séparément ou en combinaison, et notamment :
- dans son étape on peut imposer au véhicule l'autre phase d'accélération à l'expiration d'une durée prédéfinie ayant commencée juste après l'accélération imposée ;
   ➢ dans son étape on peut utiliser une durée prédéfinie qui est comprise entre 0,5 seconde et dix secondes ;
- dans son étape on peut imposer au véhicule l'autre phase d'accélération jusqu'à obtention d'une vitesse égale à la consigne de vitesse après que le conducteur ait imposé une accélération pendant la décélération, en appuyant sur une pédale d'accélérateur du véhicule ;
- dans son étape, on peut imposer au véhicule considéré l'autre phase d'accélération jusqu'à obtention d'une vitesse supérieure ou égale à une vitesse maximale calculée pour passer une portion de virage empruntée confortablement ;
- dans son étape, lorsque le conducteur sélectionne une nouvelle consigne de vitesse pendant la phase de décélération, on peut poursuivre cette dernière puis on peut imposer au véhicule une autre phase d'accélération jusqu'à obtention d'une vitesse égale à cette nouvelle consigne de vitesse ;
- dans son étape on peut imposer la phase d'accélération soit juste après la phase de décélération, soit après avoir laissé passer une durée prédéfinie à la fin de la phase de décélération, soit encore lorsque le rayon de courbure de la future portion que s'apprête à emprunter le véhicule devient suffisamment élevée pour permettre une nouvelle phase de d'accélération.

L'invention propose également un produit programme d'ordinateur comprenant un jeu d'instructions qui, lorsqu'il est exécuté par des moyens de traitement, est propre à mettre en œuvre un procédé de régulation de vitesse du type de celui présenté ci-avant pour réguler la vitesse d'un véhicule à conduite au moins partiellement automatisée et connaissant le rayon de courbure d'une future portion qu'il s'apprête à emprunter sur une voie de circulation sur laquelle il circule.

L'invention propose également un dispositif de régulation de vitesse, d'une part, destiné à équiper un véhicule à conduite au moins partiellement automatisée et connaissant le rayon de courbure d'une future portion qu'il s'apprête à emprunter sur une voie de circulation sur laquelle il circule, et, d'autre part, comprenant au moins un calculateur contrôlant la régulation de la vitesse du véhicule en fonction d'une consigne de vitesse, et, en cas de détection d'un rayon de courbure de la future portion qui est représentatif d'un virage, contrôlant l'imposition au véhicule d'une phase de décélération jusqu'à une vitesse choisie puis d'une phase d'accélération jusqu'à obtention d'une vitesse égale à la consigne de vitesse (éventuellement adaptée en fonction de la vitesse d'un autre véhicule situé devant celui considéré ou s'il n'y a pas de nouveau virage).

Ce dispositif de régulation de vitesse se caractérise par le fait que, lorsqu'un conducteur du véhicule impose à ce dernier une accélération pendant la phase de décélération, son calculateur contrôle l'arrêt de cette phase de décélération puis l'imposition au véhicule d'une autre phase d'accélération jusqu'à obtention d'une vitesse égale à la consigne de vitesse (éventuellement adaptée en fonction de la vitesse d'un autre véhicule situé devant celui considéré ou s'il n'y a pas de nouveau virage).

L'invention propose également un véhicule, éventuellement de type automobile, à conduite au moins partiellement automatisée, connaissant le rayon de courbure d'une future portion qu'il s'apprête à emprunter sur une voie de circulation sur laquelle il circule, et comprenant un dispositif de régulation de vitesse du type de celui présenté ci-avant.

### Brève description des figures

D'autres caractéristiques et avantages de l'invention apparaîtront à l'examen de la description détaillée ci-après, et des dessins annexés, sur lesquels :
[Fig. 1] illustre schématiquement et fonctionnellement un véhicule situé sur l'une des deux voies de circulation d'une route et équipé d'un capteur, de circuits d'analyse et d'un exemple de réalisation d'un dispositif de régulation de vitesse selon l'invention, et
[Fig. 2] illustre schématiquement au sein d'un diagramme une première courbe (c1) d'évolution temporelle de la vitesse d'un véhicule faisant l'objet d'une régulation de vitesse avec décélération dans un virage, et une seconde courbe (c2) d'évolution temporelle de la vitesse de ce même véhicule dans ce même virage en cas d'accélération imposée par le conducteur pendant la phase de décélération, et
[Fig. 3] illustre schématiquement un exemple d'algorithme mettant en œuvre un procédé de régulation de vitesse selon l'invention.

### Description détaillée de l'invention

L'invention a notamment pour but de proposer un procédé de régulation de vitesse, et un dispositif de régulation de vitesse DR associé, destinés à permettre la régulation de la vitesse d'un véhicule V à conduite au moins partiellement automatisée (ou autonome), notamment en présence d'un virage.

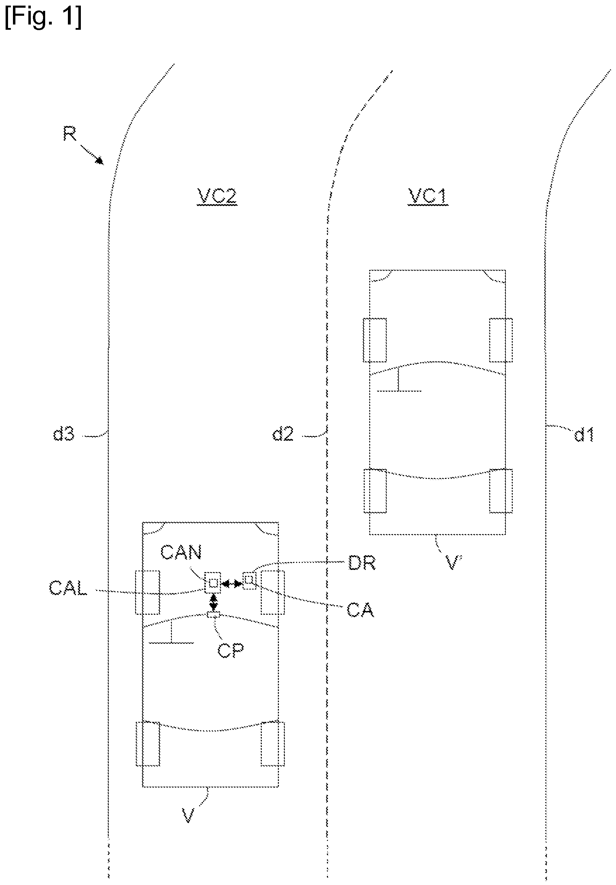

Dans ce qui suit, on considère, à titre d'exemple non limitatif, que le véhicule V est de type automobile. Il s'agit par exemple d'une voiture, comme illustré sur la figure 1. Mais l'invention n'est pas limitée à ce type de véhicule. Elle concerne en effet tout type de véhicule terrestre à conduite au moins partiellement automatisée et pouvant circuler sur des voies de circulation terrestres.

On a schématiquement et fonctionnellement représenté sur la figure 1 une route R comportant des première VC1 et seconde VC2 voies de circulation sur lesquelles circulent respectivement deux véhicules V' et V. La première voie de circulation VC1 est encadrée (ou délimitée) par deux délimitations d1 et d2, et la seconde voie de circulation VC1 est encadrée (ou délimitée) par deux délimitations d2 et d3. Par ailleurs, sur cette figure 1 le véhicule V' circule sur la première voie de circulation VC1, tandis que le véhicule V circule sur la seconde voie de circulation VC2 afin de doubler (ou dépasser) le véhicule V'.

Le véhicule V comprend au moins un dispositif de régulation de vitesse DR selon l'invention. Dans l'exemple illustré non limitativement sur la figure 1, le véhicule V comprend aussi, de façon optionnelle un capteur CP et des circuits d'analyse CAN sur lesquels on reviendra plus loin.

On notera que pour que l'invention puisse être mise en œuvre il faut que le véhicule V connaisse à chaque instant les rayons de courbure de la portion de la seconde voie de circulation VC2 sur laquelle il circule et de la future portion qu'il s'apprête à emprunter sur cette seconde voie de circulation VC2 sur laquelle il circule. Cette connaissance peut résulter d'une analyse de l'environnement, ou bien d'informations routières définissant chaque portion de la route R empruntée (et notamment son rayon de courbure (ou son inverse, à savoir la courbure)), ou encore d'une analyse des coordonnées (par exemple GPS) de la route R.

L'analyse de l'environnement peut, par exemple, résulter de la présence (de façon permanente) dans le véhicule V d'au moins un capteur CP et de circuits d'analyse CAN, comme illustré non limitativement sur la figure 1.

Ce capteur CP comprend au moins une caméra numérique installée dans une partie avant du véhicule (par exemple sur le pare-brise ou sur le rétroviseur intérieur), et chargée d'acquérir des images numériques dans l'environnement qui est au moins situé devant le véhicule V (ainsi qu'éventuellement sur une partie des deux côtés latéraux de ce dernier (V)).

On notera que le nombre de capteurs CP est ici égal à un (1), mais il peut prendre n'importe quelle valeur supérieure ou égale à un (1) (au moins un capteur sur l'avant), dès lors que cela permet d'acquérir des données dans l'environnement qui est au moins situé devant le véhicule V. Ainsi, le véhicule V pourrait aussi comprendre au moins un capteur à ultrasons, ou au moins un radar ou lidar, ou encore au moins une autre caméra installée dans une partie arrière et/ou des caméras installées sur ses deux côtés latéraux.

Les circuits d'analyse CAN sont agencés de manière à analyser au moins les images numériques, acquises par le capteur CP dans l'environnement situé au moins devant le véhicule V, afin de déterminer des données qui sont représentatives au moins de la seconde voie de circulation VC2 sur laquelle circule temporairement le véhicule V. Par exemple, ces données d'environnement définissent au moins le rayon de courbure (ou la courbure) des portions des deux délimitations d2 et d3 de la seconde voie de circulation VC2 que le véhicule V s'apprête à emprunter. On notera que ces données d'environnement peuvent aussi définir le cap du véhicule V, et/ou l'estimée de la dérivée du rayon de courbure, et/ou la largeur d'une délimitation, et/ou la distance séparant deux délimitations (ici d2 et d3), par exemple.

Dans l'exemple illustré non limitativement sur la figure 1, les circuits d'analyse CAN font partie d'un calculateur CAL embarqué dans le véhicule V. Mais cela n'est pas obligatoire. En effet, les circuits d'analyse CAN pourraient comprendre leur propre calculateur. Par conséquent, les circuits d'analyse CAN peuvent être réalisés sous la forme d'une combinaison de circuits ou composants électriques ou électroniques (ou « hardware ») et de modules logiciels (ou informatiques ou encore « software »).

Les informations routières (définissant chaque portion de la route R empruntée) peuvent provenir d'une base de données définissant une cartographie routière très précise, et embarquée dans le véhicule V ou bien accessible par voie d'ondes par ce dernier (V). Dans ce cas, on détermine précisément la position géographique de la future portion que le véhicule V s'apprête à emprunter sur la seconde voie de circulation VC2, par exemple au moyen d'un dispositif d'aide à la navigation embarqué (éventuellement temporairement) dans le véhicule V, puis on détermine dans la base de données le rayon de courbure (ou la courbure) qui est associé(e) à cette future portion.

En l'absence de capteur CP mais en présence de coordonnées (par exemple GPS) de la route R, les circuits d'analyse CAN sont agencés de manière à analyser ces coordonnées afin de déterminer les données d'environnement qui définissent au moins le rayon de courbure (ou la courbure) des portions des deux délimitations d2 et d3 de la seconde voie de circulation VC2 que le véhicule V s'apprête à emprunter. Ces coordonnées de la route R peuvent, par exemple, être fournies par un dispositif d'aide à la navigation embarqué (éventuellement temporairement) dans le véhicule V.

Comme évoqué plus haut, l'invention propose notamment un procédé de régulation de vitesse destiné à permettre la régulation automatisée de la vitesse du véhicule V.

Ce procédé (de régulation de vitesse) peut être au moins partiellement mis en œuvre par le dispositif de régulation (de vitesse) DR qui comprend à cet effet au moins un calculateur CA. Ce dernier (CA) peut, par exemple, comprendre au moins un processeur de signal numérique (ou DSP (« Digital Signal Processor »)), éventuellement associé à au moins une mémoire.

On notera que ce dispositif de régulation DR est éventuellement de type ADAS (« Advanced Driver Assistance System » - dispositif d'assistance (ou d'aide) à la conduite).

On notera également que le calculateur CA peut éventuellement assurer au sein du véhicule V au moins une autre fonction que celle qui fait l'objet de l'invention. Ainsi, il pourrait, par exemple, comprendre les éventuels circuits d'analyse CAN.

Le procédé d'assistance, selon l'invention, comprend une étape 10-90 dans laquelle on commence par réguler la vitesse du véhicule V en fonction d'une consigne de vitesse cv (et éventuellement d'un autre véhicule situé devant le véhicule V considéré). Cette régulation est contrôlée par le calculateur CA au moyen de commandes qu'il détermine pour des organes du véhicule V qui sont impliqués dans les déplacements de ce dernier (V), comme par exemple le groupe motopropulseur (ou GMP), le système de freinage, et les moyens de changement de vitesse (par exemple une boîte de vitesses automatique).

On notera que la consigne de vitesse cv peut être choisie soit par le conducteur du véhicule V, soit par un dispositif embarqué dans ce dernier (V), par exemple en fonction d'une limitation de vitesse imposée sur la portion de la route R empruntée.

Puis, pendant cette étape 10-90, en cas de détection d'un rayon de courbure de la future portion (que le véhicule V s'apprête à emprunter (au moins) sur la seconde voie de circulation VC2) représentatif d'un virage, on impose au véhicule V une phase de décélération jusqu'à une vitesse choisie vd. Cette vitesse choisie vd est déterminée de manière à ce que le véhicule V passe confortablement la portion de virage empruntée. Puis, une fois cette vitesse choisie vd atteinte par le véhicule V, on impose à ce dernier (V) une phase d'accélération (ci-après dite n°1) jusqu'à obtention d'une vitesse égale à la consigne de vitesse cv (éventuellement adaptée en fonction de la vitesse d'un autre véhicule situé devant celui considéré (V) ou s'il n'y a pas de nouveau virage).

On comprendra que c'est le calculateur CA qui détecte si le rayon de courbure de la future portion est représentatif d'un virage, et qui contrôle l'imposition au véhicule V de la phase de décélération puis de la phase d'accélération n°1.

On notera que la phase d'accélération n°1 peut être imposée juste après la phase de décélération, ou bien après avoir laissé passer une durée prédéfinie à la fin de la phase de décélération, ou encore lorsque le rayon de courbure de la future portion que s'apprête à emprunter le véhicule devient suffisamment élevée pour permettre une nouvelle phase de d'accélération.

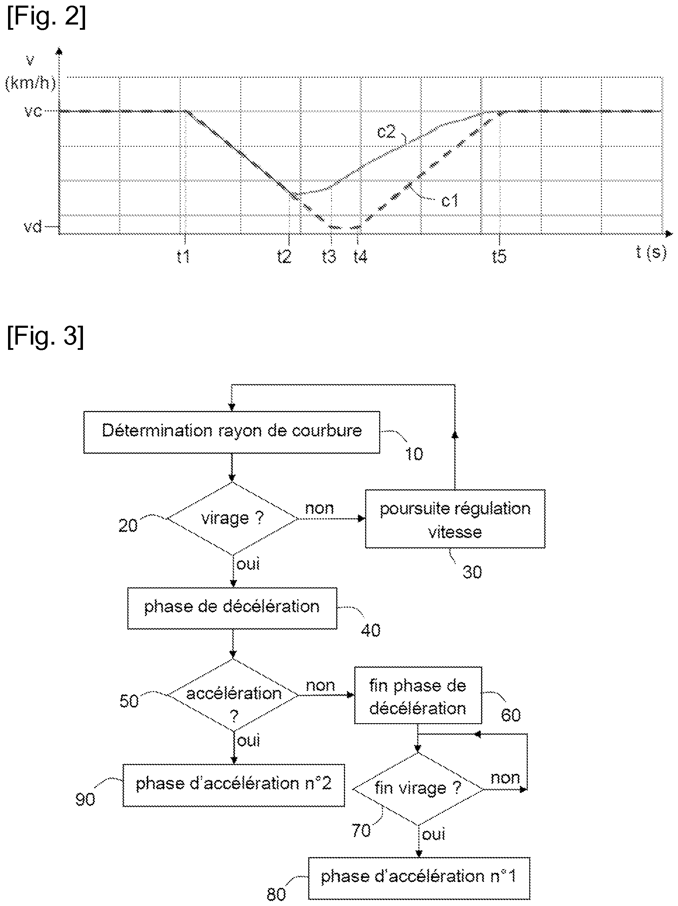

On a schématiquement illustré sur la figure 2, au sein d'un diagramme, une première courbe c1 d'évolution temporelle (t en secondes) de la vitesse v (en km/h) du véhicule V pendant une régulation de vitesse avec décélération dans un virage. Dans cet exemple purement illustratif, avant l'instant t1, la vitesse du véhicule V est régulée à la consigne de vitesse cv par le dispositif de régulation DR. Puis à cet instant t1, le dispositif de régulation DR détecte un prochain (ou futur) virage devant le véhicule V, et donc impose au véhicule V une phase de décélération jusqu'à une vitesse choisie vd. Cette dernière (vd) est atteinte à un instant t3. Puis, à un instant t4 (qui peut être sensiblement égal à t3) le dispositif de régulation DR impose au véhicule V la phase d'accélération n°1 jusqu'à obtention d'une vitesse égale à la consigne de vitesse cv. Cette dernière (cv) est ici atteinte à un instant t5. La régulation de vitesse à la consigne de vitesse cv est donc de nouveau réalisée après cet instant t5 (jusqu'à la détection d'un prochain virage).

On notera que la différence entre la consigne de vitesse cv et la vitesse choisie vd varie préférentiellement en fonction de cette consigne de vitesse cv. Mais elle pourrait aussi être prédéfinie, et donc constante. A titre d'exemple, lorsque la consigne de vitesse cv est égale à environ 120 km/h, la vitesse choisie vd peut être comprise entre 100 km/h et 110 km/h. Le conducteur du véhicule V peut éventuellement choisir la loi de variation de la différence (cv - vd) en fonction de cv.

Selon l'invention, dans l'étape 10-90, lorsque le conducteur du véhicule V impose à ce dernier (V) une accélération pendant la phase de décélération (imposée suite à la détection d'un prochain virage), on arrête cette phase de décélération puis on impose au véhicule V une autre phase d'accélération (ci-après dite n°2) jusqu'à obtention d'une vitesse égale à la consigne de vitesse cv (éventuellement adaptée en fonction de la vitesse d'un autre véhicule situé devant celui considéré (V) ou s'il n'y a pas de nouveau virage).

En d'autres termes, après la détection de cette accélération imposée, on ne reprend plus la régulation en virage classique (consistant à finir la phase de décélération précédemment initiée puis à imposer la phase d'accélération n°1), mais on cesse la décélération et on impose à la place une phase d'accélération n°2 pour que le véhicule V retrouve sa consigne de vitesse cv (éventuellement adaptée en fonction de la vitesse d'un autre véhicule situé devant celui considéré (V) ou s'il n'y a pas de nouveau virage). On prend ainsi en compte la volonté du conducteur, à savoir l'envie de ne pas voir la vitesse de son véhicule V baisser jusqu'à la vitesse choisie vd de fin de phase de décélération, par exemple ici du fait qu'il veut poursuivre dans le virage à venir le dépassement en cours du véhicule V' circulant sur la première voie de circulation VC1. De plus, cela permet d'éviter un ralentissement du flux de circulation (ici sur la seconde voie de circulation VC2), ce qui contribue à la tranquillité d'esprit des conducteurs des véhicules qui suivent le véhicule V et à la sécurité des usagers de la route R.

On a schématiquement illustré sur la figure 2, au sein du diagramme, une seconde courbe c2 d'évolution temporelle (t en secondes) de la vitesse v (en km/h) du véhicule V en cas d'accélération imposée par le conducteur pendant la phase de décélération dans le même virage que celui concerné par la première courbe c1 décrite plus haut. Dans cet exemple purement illustratif, la phase de décélération jusqu'à la vitesse choisie vd a débuté à l'instant t1, et à un instant t2 antérieur à l'instant t3 le conducteur du véhicule V impose à ce dernier (V) une accélération jusqu'à un instant qui est ici sensiblement l'instant t3. Puis, à cet instant t3 (mais cela pourrait être un petit peu après, comme on le verra plus loin), le dispositif de régulation DR impose au véhicule V l'autre phase d'accélération n°2 jusqu'à obtention d'une vitesse égale à la consigne de vitesse cv. Cette dernière (cv) est ici atteinte à l'instant t5. La régulation de vitesse à la consigne de vitesse cv est donc de nouveau réalisée après cet instant t5 (jusqu'à la détection d'un prochain virage).

Par exemple, dans l'étape 10-90 on (le calculateur CA) peut imposer au véhicule V l'autre phase d'accélération n°2 à l'expiration d'une durée prédéfinie ayant commencée juste après l'accélération imposée pendant la phase de décélération. Dans ce cas, on (le calculateur CA) peut, par exemple, utiliser une durée prédéfinie qui est comprise entre 0,5 seconde et dix secondes. Mais dans une variante, on (le calculateur CA) pourrait imposer au véhicule V l'autre phase d'accélération n°2 juste après la détection de la fin de l'accélération imposée comme dans l'exemple de la courbe c2 de la figure 2.

On notera que dans l'étape 10-90 on peut imposer au véhicule V l'autre phase d'accélération n°2 (jusqu'à obtention d'une vitesse égale à la consigne de vitesse cv) après que le conducteur ait imposé une accélération pendant la décélération, en appuyant sur la pédale d'accélérateur (ou équivalent) du véhicule V.

On notera également que dans l'étape 10-90, on peut imposer au véhicule V l'autre phase d'accélération n°2 jusqu'à obtention d'une vitesse supérieure ou égale à une vitesse maximale calculée pour passer la portion de virage empruntée confortablement.

On notera également que dans l'étape 10-90, lorsque le conducteur sélectionne une nouvelle consigne de vitesse cv' pendant la phase de décélération, on peut poursuivre cette dernière, puis on peut imposer au véhicule V une autre phase d'accélération (ci-après dite n°3) jusqu'à obtention d'une vitesse égale à cette nouvelle consigne de vitesse cv'. En d'autres termes, en présence de cette option la sélection d'une nouvelle consigne de vitesse cv' n'est pas considérée par le calculateur CA comme une volonté du conducteur d'interrompre la phase de décélération, mais seulement comme le souhait que la prochaine phase d'accélération n°3 se termine lorsque la vitesse du véhicule V sera devenue égale à la nouvelle consigne de vitesse cv'. Cette dernière option nécessite de préférence que la nouvelle consigne de vitesse cv' soit supérieure à une vitesse minimale.

On a schématiquement illustré sur la figure 3 un exemple d'algorithme mettant en œuvre l'étape du procédé d'assistance décrit ci-avant.

Dans une première sous-étape 10 on (le calculateur CA) détermine, pendant qu'il régule la vitesse du véhicule V à la consigne de vitesse cv, le rayon de courbure de la future portion (que le véhicule V s'apprête à emprunter sur la seconde voie de circulation VC2).

Puis, dans une deuxième sous-étape 20 on (le calculateur CA) détermine si ce rayon de courbure est représentatif d'un virage. Dans la négative (« non »), on (le calculateur CA) poursuit normalement la régulation de vitesse à la consigne de vitesse cv dans une troisième sous-étape 30 et effectue de nouveau la première sous-étape 10. En revanche, dans l'affirmative (« oui »), on (le calculateur CA) impose au véhicule V, dans une quatrième sous-étape 40, une phase de décélération jusqu'à une vitesse choisie vd.

Puis, dans une cinquième sous-étape 50, on (le calculateur CA) détermine si le conducteur du véhicule V vient d'imposer à ce dernier (V) une accélération pendant la phase de décélération.

Dans la négative (« non »), on (le calculateur CA) finit la phase de décélération en cours dans une sixième sous-étape 60. Puis, on (le calculateur CA) peut, par exemple, déterminer dans une septième sous-étape 70 si le véhicule V est sorti du virage. Dans la négative (« non »), on (le calculateur CA) peut effectuer de nouveau la septième sous-étape 70. En revanche, dans l'affirmative (« oui »), on (le calculateur CA) impose au véhicule V la phase d'accélération n°1 dans une huitième sous-étape 80. Puis, on (le calculateur CA) va reprendre la régulation de vitesse normale (hors virage), à la consigne de vitesse cv, et donc on (le calculateur CA) va effectuer de nouveau la première sous-étape 10.

En revanche, si la détermination effectuée dans la cinquième sous-étape 50 (et donc dans l'affirmative) indique que le conducteur vient d'imposer une accélération, on (le calculateur CA) arrête la phase de décélération en cours puis on impose au véhicule V la phase d'accélération n°2 dans une neuvième sous-étape 90. Puis, on (le calculateur CA) va reprendre la régulation de vitesse normale (hors virage), à la consigne de vitesse cv (éventuellement adaptée en fonction de la vitesse d'un autre véhicule situé devant celui considéré (V)), et donc on (le calculateur CA) va effectuer de nouveau la première sous-étape 10.

On notera que l'invention propose aussi un produit programme d'ordinateur comprenant un jeu d'instructions qui, lorsqu'il est exécuté par des moyens de traitement de type circuits électroniques (ou hardware), comme par exemple le calculateur CA, est propre à mettre en œuvre le procédé de régulation de vitesse décrit ci-avant pour réguler la vitesse du véhicule V.

On notera également que sur la figure 1 le dispositif de régulation DR est très schématiquement illustré avec seulement son calculateur CA. Ce dispositif de régulation DR peut prendre la forme d'un boitier comprenant des circuits intégrés (ou imprimés), ou bien de plusieurs circuits intégrés (ou imprimés) reliés par des connections filaires ou non filaires. On entend par circuit intégré (ou imprimé) tout type de dispositif apte à effectuer au moins une opération électrique ou électronique. Comme évoqué plus haut, ce dispositif de régulation DR peut comprendre au moins un processeur, par exemple de signal numérique (ou DSP (Digital Signal Processor)), une mémoire vive pour stocker des instructions pour la mise en œuvre par ce processeur du procédé d'assistance tel que décrit ci-avant, et une mémoire de masse notamment pour le stockage des données d'environnement obtenues, et des éventuelles données intermédiaires intervenant dans tous les calculs. Le calculateur CA reçoit au moins les données d'environnement pour les utiliser dans des calculs, éventuellement après les avoir mises en forme et/ou démodulées et/ou amplifiées, de façon connue en soi. Le dispositif de régulation DR peut également comporter une interface d'entrée pour la réception d'au moins les données d'environnement, et une interface de sortie pour la transmission des résultats de ses calculs, et notamment les commandes de régulation de vitesse.

Une ou plusieurs sous-étapes de l'étape du procédé de régulation de vitesse peuvent être effectuées par des composants différents. Ainsi, le procédé de régulation de vitesse peut-être mis en œuvre par une pluralité de processeurs, mémoire vive, mémoire de masse, interface d'entrée, interface de sortie et/ou processeur de signal numérique. Dans ces situations, le dispositif de régulation DR peut-être décentralisé, au sein d'un réseau local (plusieurs processeurs reliés entre eux par exemple) ou d'un réseau étendu.

## Revendications

1. Procédé de régulation de la vitesse d'un véhicule (V) à conduite au moins partiellement automatisée et connaissant le rayon de courbure d'une future portion qu'il s'apprête à emprunter sur une voie de circulation (VC2) sur laquelle il circule, ledit procédé comprenant une étape (10-90) dans laquelle on régule la vitesse dudit véhicule (V) en fonction d'une consigne de vitesse, et, en cas de détection d'un rayon de courbure de ladite future portion représentatif d'un virage, on impose audit véhicule (V) une phase de décélération (40) jusqu'à une vitesse choisie puis une phase d'accélération (80) jusqu'à obtention d'une vitesse égale à ladite consigne de vitesse, **caractérisé en ce que** dans ladite étape (10-90), lorsqu'un conducteur dudit véhicule (V) impose à ce dernier (V) une accélération pendant ladite phase de décélération (40), on arrête ladite phase de décélération (40) puis on impose audit véhicule (V) une autre phase d'accélération (90) jusqu'à obtention d'une vitesse égale à ladite consigne de vitesse.

2. Procédé selon la revendication 1, **caractérisé en ce que** dans ladite étape (10-90) on impose audit véhicule (V) ladite autre phase d'accélération (90) à l'expiration d'une durée prédéfinie ayant commencée juste après ladite accélération imposée.

3. Procédé selon la revendication 1 ou 2, **caractérisé en ce que** dans ladite étape (10-90) on impose audit véhicule (V) ladite autre phase d'accélération (90) jusqu'à obtention d'une vitesse supérieure ou égale à une vitesse maximale calculée pour passer une portion de virage empruntée confortablement.

4. Procédé selon l'une des revendications 1 à 3, **caractérisé en ce que** dans ladite étape (10-90) on impose audit véhicule (V) ladite autre phase d'accélération (90) jusqu'à obtention d'une vitesse égale à ladite consigne de vitesse après que le conducteur ait imposé une accélération pendant la décélération, en appuyant sur une pédale d'accélérateur dudit véhicule (V).

5. Procédé selon l'une des revendications 1 à 4, **caractérisé en ce que** dans ladite étape (10-90), lorsque ledit conducteur sélectionne une nouvelle consigne de vitesse pendant ladite phase de décélération (40), on poursuit cette dernière puis on impose audit véhicule (V) une autre phase d'accélération jusqu'à obtention d'une vitesse égale à ladite nouvelle consigne de vitesse.

6. Procédé selon l'une des revendications 1 à 5, **caractérisé en ce que** dans ladite étape (10-90) on impose ladite phase d'accélération soit juste après la phase de décélération, soit après avoir laissé passer une durée prédéfinie à la fin de ladite phase de décélération, soit encore lorsque le rayon de courbure de la future portion que s'apprête à emprunter ledit véhicule (V) devient suffisamment élevée pour permettre une nouvelle phase de d'accélération.

7. Produit programme d'ordinateur comprenant un jeu d'instructions qui, lorsqu'il est exécuté par des moyens de traitement, est propre à mettre en œuvre le procédé de régulation de vitesse selon l'une des revendications précédentes pour réguler la vitesse d'un véhicule (V) à conduite au moins partiellement automatisée et connaissant le rayon de courbure d'une future portion qu'il s'apprête à emprunter sur une voie de circulation (VC2) sur laquelle il circule.

8. Dispositif de régulation de vitesse (DR) pour un véhicule (V) à conduite au moins partiellement automatisée et connaissant le rayon de courbure d'une future portion qu'il s'apprête à emprunter sur une voie de circulation (VC2) sur laquelle il circule, ledit dispositif (DR) comprenant au moins un calculateur (CA) contrôlant la régulation de la vitesse dudit véhicule (V) en fonction d'une consigne de vitesse, et, en cas de détection d'un rayon de courbure de ladite future portion représentatif d'un virage, contrôlant l'imposition audit véhicule (V) d'une phase de décélération jusqu'à une vitesse choisie puis d'une phase d'accélération jusqu'à obtention d'une vitesse égale à ladite consigne de vitesse, **caractérisé en ce que**, lorsqu'un conducteur dudit véhicule (V) impose à ce dernier (V) une accélération pendant ladite phase de décélération, ledit calculateur (CA) contrôle l'arrêt de ladite phase de décélération puis l'imposition audit véhicule (V) d'une autre phase d'accélération jusqu'à obtention d'une vitesse égale à ladite consigne de vitesse.

9. Véhicule (V) à conduite au moins partiellement automatisée et connaissant le rayon de courbure d'une future portion qu'il s'apprête à emprunter sur une voie de circulation (VC2) sur laquelle il circule, **caractérisé en ce qu'**il comprend un dispositif de régulation de vitesse (DR) selon la revendication 8.

10. Véhicule selon la revendication 9, **caractérisé en ce qu'**il est de type automobile.

## Patentansprüche

1. Verfahren zur Regelung der Geschwindigkeit eines Fahrzeugs (V) mit zumindest teilweise automatisiertem Fahren und Kenntnis des Krümmungsradius eines künftigen Abschnitts, den es auf einer Fahrspur (VC2), auf der es fährt, zu befahren beabsichtigt, wobei das Verfahren einen Schritt (10-90) umfasst, in dem man die Geschwindigkeit des Fahrzeugs (V) in Abhängigkeit von einem Geschwindigkeitssollwert regelt und im Fall der Erfassung eines Krümmungsradius des künftigen Abschnitts, der für eine Kurve repräsentativ ist, dem Fahrzeug (V) eine Verzögerungsphase (40) bis zu einer gewählten Geschwindigkeit und dann eine Beschleunigungsphase (80) auferlegt wird, bis eine Geschwindigkeit erreicht ist, die gleich dem Geschwindigkeitssollwert ist, **dadurch gekennzeichnet, dass** in dem Schritt (10-90), wenn ein Fahrer des Fahrzeugs (V) diesem (V) während der Verzögerungsphase (40) eine Beschleunigung auferlegt, die Verzögerungsphase (40) angehalten wird und dann dem Fahrzeug (V) eine weitere Beschleunigungsphase (90) auferlegt wird, bis eine Geschwindigkeit erreicht wird, die gleich dem Geschwindigkeitssollwert ist.

2. Verfahren nach Anspruch 1, **dadurch gekennzeichnet, dass** in dem Schritt (10-90) dem Fahrzeug (V) die weitere Beschleunigungsphase (90) nach Ablauf einer vordefinierten Zeit aufgezwungen wird, die unmittelbar nach der aufgezwungenen Beschleunigung begonnen hat.

3. Verfahren nach Anspruch 1 oder 2, **dadurch gekennzeichnet, dass** in dem Schritt (10-90) dem Fahrzeug (V) die weitere Beschleunigungsphase (90) aufgezwungen wird, bis eine Geschwindigkeit erreicht ist, die größer oder gleich einer maximalen Geschwindigkeit ist, die berechnet wurde, um einen bequem befahrenen Kurvenabschnitt zu passieren.

4. Verfahren nach einem der Ansprüche 1 bis 3, **dadurch gekennzeichnet, dass** in dem Schritt (10-90) dem Fahrzeug (V) die weitere Beschleunigungsphase (90) aufgezwungen wird, bis eine Geschwindigkeit erreicht ist, die gleich dem Geschwindigkeitssollwert ist, nachdem der Fahrer während der Verzögerung eine Beschleunigung aufgezwungen hat, indem er ein Gaspedal des Fahrzeugs (V) betätigt.

5. Verfahren nach einem der Ansprüche 1 bis 4, **dadurch gekennzeichnet, dass** in dem Schritt (10-90), wenn der Fahrer während der Verzögerungsphase (40) einen neuen Geschwindigkeitssollwert auswählt, die Verzögerungsphase fortgesetzt wird und dann dem Fahrzeug (V) eine weitere Beschleunigungsphase aufgezwungen wird, bis eine Geschwindigkeit erreicht wird, die gleich dem neuen Geschwindigkeitssollwert ist.

6. Verfahren nach einem der Ansprüche 1 bis 5, **dadurch gekennzeichnet, dass** in dem Schritt (10-90) die Beschleunigungsphase entweder unmittelbar nach der Verzögerungsphase oder nach Ablauf einer vordefinierten Zeitdauer am Ende der Verzögerungsphase oder noch, wenn der Krümmungsradius des zukünftigen Abschnitts, den das Fahrzeug (V) zu befahren beabsichtigt, ausreichend groß wird, um eine weitere Beschleunigungsphase zu ermöglichen, erzwungen wird.

7. Computerprogrammprodukt mit einem Befehlssatz, der, wenn er von Verarbeitungsmitteln ausgeführt wird, geeignet ist, das Verfahren zur Geschwindigkeitsregelung nach einem der vorhergehenden Ansprüche zu implementieren, um die Geschwindigkeit eines Fahrzeugs (V) zu regeln, das zumindest teilweise automatisiert fährt und den Krümmungsradius eines künftigen Abschnitts kennt, den es auf einer Fahrspur (VC2), auf der es fährt, zu befahren beabsichtigt.

8. Vorrichtung zur Geschwindigkeitsregelung (DR) für ein Fahrzeug (V), das zumindest teilweise automatisiert fährt und den Krümmungsradius eines künftigen Abschnitts kennt, den es auf einer Fahrspur (VC2), auf der es fährt, zu befahren beabsichtigt, wobei die Vorrichtung (DR) mindestens einen Rechner (CA) umfasst, der die Regelung der Geschwindigkeit des Fahrzeugs (V) in Abhängigkeit von einem Geschwindigkeitssollwert steuert und im Fall der Erfassung eines Krümmungsradius des künftigen Abschnitts, der eine Kurve darstellt, die Auferlegung der Geschwindigkeit des Fahrzeugs (V) steuert, das Auferlegen einer Verzögerungsphase bis zu einer gewählten Geschwindigkeit auf das Fahrzeug (V) und dann einer Beschleunigungsphase bis zum Erreichen einer Geschwindigkeit, die gleich dem Geschwindigkeitssollwert ist, steuert, **dadurch gekennzeichnet, dass**, wenn ein Fahrer des Fahrzeugs (V) diesem (V) während der Verzögerungsphase eine Beschleunigung auferlegt, der Rechner (CA) das Anhalten der Verzögerungsphase und dann das Auferlegen einer weiteren Beschleunigungsphase auf das Fahrzeug (V) bis zum Erreichen einer Geschwindigkeit, die gleich dem Geschwindigkeitssollwert ist, steuert.

9. Fahrzeug (V), das zumindest teilweise automatisiert fährt und den Krümmungsradius eines zukünftigen Abschnitts kennt, den es auf einer Fahrspur (VC2), auf der es fährt, zu befahren beabsichtigt, **dadurch gekennzeichnet, dass** es eine Vorrichtung zur Geschwindigkeitsregelung (DR) nach Anspruch 8 umfasst.

10. Fahrzeug nach Anspruch 9, **dadurch gekennzeichnet, dass** es vom Typ Automobil ist.

## Claims

1. Method for regulating the speed of a vehicle (V) with at least partially automated driving and knowing the radius of curvature of a future portion which it is about to take on a traffic lane (VC2) on which it is travelling, the said method comprising a step (10-90) in which the speed of the said vehicle (V) is regulated as a function of a speed set point, and, in the event of detection of a radius of curvature of the said future portion representative of a bend a deceleration phase (40) is imposed on the said vehicle (V) up to a chosen speed and then an acceleration phase (80) is imposed until a speed equal to the said speed set point is obtained, **characterized in that** in the said step (10-90) when a driver of said vehicle (V) imposes on the latter (V) an acceleration during said deceleration phase (40), said deceleration phase (40) is stopped and then another acceleration phase (90) is imposed on said vehicle (V) until a speed equal to said set speed is obtained.

2. Method according to claim 1, **characterised in that** in said step (10-90) said other acceleration phase (90) is imposed on said vehicle (V) at the expiry of a predefined time period having begun just after said imposed acceleration.

3. Method according to claim 1 or 2, **characterized in that** in said step (10-90) said further acceleration phase (90) is imposed on said vehicle (V) until a speed greater than or equal to a maximum speed calculated for passing a comfortably traveled portion of a curve is obtained.

4. Method according to one of the claims 1 to 3, **characterized in that** in said step (10-90) said further acceleration phase (90) is imposed on said vehicle (V) until a speed equal to said set speed is obtained after the driver has imposed an acceleration during deceleration, by pressing an accelerator pedal of said vehicle (V).

5. Method according to one of the claims 1 to 4, **characterized in that** in said step (10-90), when said driver selects a new speed set point during said deceleration phase (40), the latter is continued and then another acceleration phase is imposed on said vehicle (V) until a speed equal to said new speed set point is obtained

6. Method according to one of claims 1 to 5, **characterised in that** in the said step (10-90) the said acceleration phase is imposed either just after the deceleration phase, or after having allowed a predefined time to pass at the end of the said deceleration phase, or again when the radius of curvature of the future portion which the said vehicle (V) is about to take becomes sufficiently high to allow a new acceleration phase.

7. A computer program product comprising a set of instructions which, when executed by processing means, is suitable for implementing the speed control method according to one of the preceding claims in order to control the speed of a vehicle (V) with at least partially automated driving and knowing the radius of curvature of a future portion which it is about to take on a traffic lane (VC2) on which it is travelling.

8. Speed regulation device (DR) for a vehicle (V) with at least partially automated driving and knowing the radius of curvature of a future portion which it is about to take on a traffic lane (VC2) on which it is travelling, said device (DR) comprising at least one computer (CA) controlling the regulation of the speed of said vehicle (V) as a function of a speed setpoint, and, in the event of detection of a radius of curvature of said future portion representative of a bend, controlling the imposition on said vehicle (V) of a speed setpoint which is representative of a bend, and controlling the imposition on said vehicle (V) of a deceleration phase up to a selected speed and then an acceleration phase until a speed equal to said speed set point is obtained, **characterised in that** when a driver of said vehicle (V) imposes on the latter (V) an acceleration during said deceleration phase, said computer (CA) controls the stopping of said deceleration phase and then the imposition on said vehicle (V) of another acceleration phase until a speed equal to said set speed is obtained.

9. Vehicle (V) with at least partially automated driving and knowing the radius of curvature of a future portion which it is about to take on a traffic lane (VC2) on which it is travelling, **characterised in that** it comprises a speed regulation device (DR) according to claim 8.

10. A vehicle according to claim 9, **characterised in that** it is of the automotive type.
